# FASCICULE DE BREVET EUROPEEN

(11) **EP 3 567 246 B1**
(45) Date de publication et mention de la délivrance du brevet: **21.12.2022**
(21) Numéro de dépôt: 19305576.1
(22) Date de dépôt: 06.05.2019
(51) Int. Cl.: F03D 7/04, G05B 17/02

(54) **OUTIL ET PROCEDE DE MODELISATION DU COMPORTEMENT PHYSIQUE D'UNE EOLIENNE**
WERKZEUG UND VEFAHREN ZUR MODELLIERUNG DES PHYSIKALISCHEN VERHALTENS EINER WINDKRAFTANLAGE
TOOL AND METHOD FOR MODELLING THE PHYSICAL BEHAVIOUR OF A WIND TURBINE

(30) Priorité: 07.05.2018 FR 1853938
(43) Date de publication de la demande: 13.11.2019
(73) Titulaire: INSTITUT FRANCAIS DE RECHERCHE POUR L'EXPLOITATION DE LA MER - IFREMER, 29280 Plouzané (FR)
(72) Inventeur: LE ROUX, Dominique, 29200 BREST (FR); LE BOULLUEC, Marc, 29217 LE CONQUET (FR); BOURGOIN, Cyril, 56100 LORIENT (FR)
(74) Mandataire: Novagraaf Technologies

(56) Documents cités:
- CN-A- 105 003 395
- GOUPEE ANDREW J ET AL: "Experimental observations of active blade pitch and generator control influence on floating wind turbine response", RENEWABLE ENERGY, PERGAMON PRESS, OXFORD, GB, vol. 104, 1 décembre 2016 (2016-12-01), pages 9-19, XP029874515, ISSN: 0960-1481, DOI: 10.1016/J.RENENE.2016.11.062
- ERIK-JAN DE RIDDER ET AL: "Development of a Scaled-Down Floating Wind Turbine for Offshore Basin Testing", VOLUME 9A: OCEAN RENEWABLE ENERGY, 8 juin 2014 (2014-06-08), XP055542512, DOI: 10.1115/OMAE2014-23441 ISBN: 978-0-7918-4553-0
- N. HARA ET AL: "Experimental validation of model-based blade pitch controller design for floating wind turbines: system identification approach : Experimental validation of blade pitch controller for FOWTs", WIND ENERGY, 1 janvier 2017 (2017-01-01), XP055542159, GB ISSN: 1095-4244, DOI: 10.1002/we.2089
- BREDMOSE H ET AL: "The Triple Spar campaign: Model tests of a 10MW floating wind turbine with waves, wind and pitch control", ENERGY PROCEDIA, ELSEVIER, NL, vol. 137, 15 décembre 2017 (2017-12-15), pages 58-76, XP085309474, ISSN: 1876-6102, DOI: 10.1016/J.EGYPRO.2017.10.334

## Description

### 1. Domaine de l'invention

L'invention concerne le domaine éolien. Elle concerne plus particulièrement un outil et un procédé de modélisation à échelle réduite du comportement physique d'une éolienne.

### 2. Art antérieur

La conception d'éolienne en mer comprend des essais en bassin permettant aux porteurs de projet éolien flottant de tester, d'optimiser et de qualifier leurs systèmes en cours de développement. Cette phase de tests permet en particulier de qualifier les mouvements répétitifs imposés à l'ensemble éolien flottant notamment par la turbine, le flotteur, le vent et la houle.

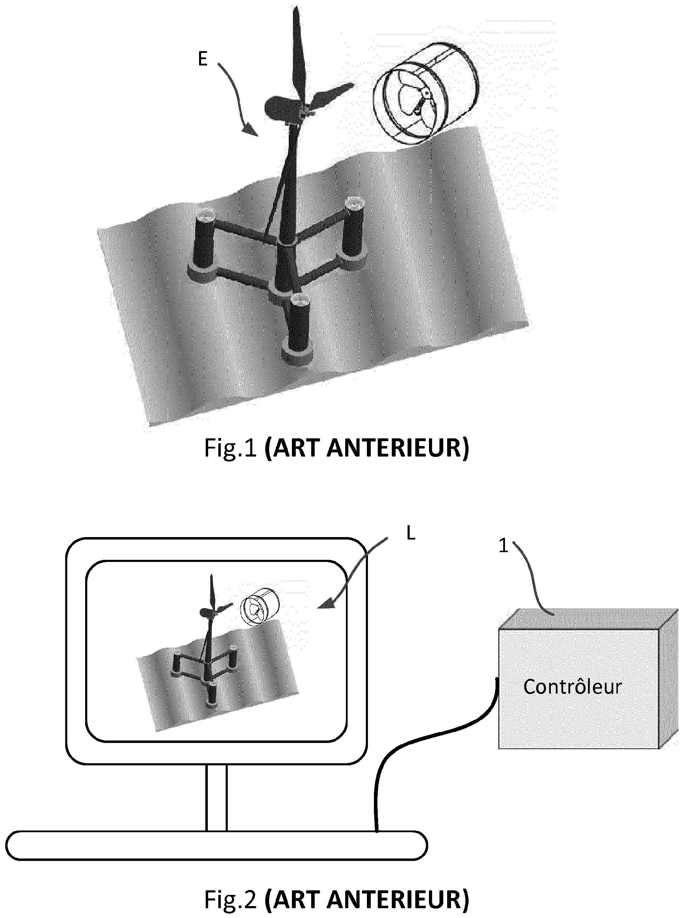

Actuellement, les essais en bassin sont réalisés au moyen d'une maquette E d'éolienne flottante comme celle représentée en figure 1 et celle utilisée dans l'étude publiée sous la référence **XP029874515.** La maquette modélise à l'échelle réduite le comportement physique de l'éolienne à l'échelle réelle avec des hypothèses limitant la représentativité de la modélisation. En effet, le fonctionnement de la maquette (notamment la vitesse de rotation de la génératrice fonctionnant en mode moteur, l'angle d'orientation des pales et l'orientation de la nacelle) est figé, aucun réglage n'est possible en temps réel au niveau de la nacelle. Or, en situation d'exploitation d'une éolienne à échelle réelle, la puissance vélique extractible par la turbine varie entre des valeurs inférieures à la puissance nominale de la turbine dans une phase dite de « charge partielle » et des valeurs supérieures à la puissance nominale de la turbine dans une phase dite de « pleine charge ». Dans une phase de pleine charge, les performances aérodynamiques du rotor doivent alors être dégradées afin d'éviter un emballement du rotor. Cette dégradation est réalisée en faisant pivoter les pales du rotor autour de leur axe respectif afin de modifier leurs propriétés de portance et de trainée, et par conséquent le coefficient de puissance du rotor de la turbine. Ce pivotement des pales est réalisé en temps réel afin de répondre au mieux aux variations de l'action du vent turbulent. A chaque instant, un compromis est recherché entre l'extraction de puissance et le maintien de la vitesse de rotation du rotor. Le pivotement des pales est réalisé de façon groupé lorsque toutes les pales tournent simultanément du même angle autour de leur axe respectif ou de façon indépendante. Dans la mesure où le fonctionnement des maquettes d'éolienne de l'art antérieur est figé, les essais en bassins sont actuellement dans l'incapacité de représenter les variations de charges contrôlées par la régulation de vitesse et de puissance de la turbine et par la mise en rotation des pales autour de leur axe respectif. En particulier, les maquettes existantes n'intègrent pas une génératrice mais un moteur faisant tourner le rotor de l'éolienne à vitesse constante. En outre, les pales ne sont pas orientables autour de leur axe en temps réel. Enfin, la maquette ne permet pas une mise au point du contrôle commande de l'éolienne en fonction des conditions de vent et de houle dans la mesure où elle ne représente pas le fonctionnement normal de l'éolienne et n'est pas interfaçable avec un contrôleur de l'éolienne.

Cette mise au point du contrôle commande de l'éolienne est couramment réalisée au moyen d'un logiciel L de simulation interfacé avec le contrôleur 1, comme représenté en figure 2. Cependant, cette étape purement logicielle ne permet pas de tester de manière aussi complète qu'avec une maquette, le comportement d'une éolienne, en particulier les phénomènes de couplage.

### 3. Objectifs de l'invention

L'invention propose une solution visant à pallier les inconvénients précités. Un objectif de l'invention est de proposer un outil permettant, à une échelle réduite, de tester, d'optimiser et de qualifier une éolienne dans toutes ses composantes structurelles et fonctionnelles et dans toutes ses phases de fonctionnement avec le contrôleur à échelle réelle.

### 4. Résumé de l'invention

L'invention concerne un outil de modélisation du comportement physique d'une éolienne, le fonctionnement de l'éolienne à échelle réelle étant contrôlé par un contrôleur, l'outil de modélisation étant caractérisé en ce qu'il comporte :
- une maquette au moins partielle de l'éolienne à échelle réduite comprenant au moins un capteur mesurant une grandeur représentative du comportement physique de la maquette et au moins un actionneur à commande réglable actionnant un élément de la maquette,
- un module de conversion comprenant une interface conçue pour communiquer avec le contrôleur et une interface conçue pour communiquer avec la maquette, le module de conversion convertissant :
   ∘ les mesures à l'échelle réduite issues du capteur en mesures à l'échelle réelle envoyées au contrôleur, et
   ∘ les consignes à l'échelle réelle issues du contrôleur en consignes à l'échelle réduite envoyées à l'actionneur. Le contrôleur de l'éolienne peut ainsi être testé et mis au point avec l'outil de modélisation. Un tel outil de modélisation permet en particulier de tester des stratégies de pilotage différentes.

Selon une réalisation particulière de l'invention, le module de conversion comporte un bloc de mise à l'échelle mettant en œuvre une loi de calcul intervenant dans la conversion. Le bloc de mise à l'échelle est par exemple un bloc de mise à l'échelle réelle permettant, à partir de résolution d'équations, de convertir des données à l'échelle maquette en données à l'échelle réelle ; ou encore, un bloc de mise à l'échelle maquette permettant, à partir de la résolution d'équations, de convertir des données à l'échelle réelle en données à l'échelle maquette.

Selon une réalisation particulière de l'invention, le module de conversion comporte un bloc de correction mettant en œuvre une table de correction intervenant dans la conversion. Le bloc de correction est par exemple un bloc de correction des mesures ou un bloc de correction des consignes et établit, au moyen d'une table, une correspondance entre respectivement une mesure ou une consigne et une mesure corrigée ou une consigne corrigée. La correction des mesures ou des consignes permet d'obtenir des comportements similaires à l'échelle maquette et à l'échelle réelle.

Selon une réalisation particulière, la maquette comportant des pales orientables, l'au moins un actionneur est un moteur d'orientation d'une pale selon un angle de rotation autour de son axe. Ainsi, le contrôleur peut être testé et mis au point pour des conditions de « pleine charge » lorsque le contrôleur doit réguler la vitesse et la puissance de la turbine, notamment par la mise en rotation des pales autour de leur axe respectif et la modulation du couple de freinage électrique de la génératrice.

Selon une réalisation particulière, la maquette comportant des pales inclinables, l'au moins un actionneur est un dispositif mécanique d'inclinaison des pales selon un angle de cône ayant pour droites génératrices les axes des pales. Ceci permet de tester des éoliennes présentant différents angles de cône.

Selon une réalisation particulière, la maquette comportant des pales, l'au moins un actionneur est une génératrice électrique dont le rotor est entraîné par les pales de la maquette. La génératrice de la maquette permet de prédire le fonctionnement de la génératrice à l'échelle réelle en fonction des conditions de vent et de houle. Elle permet également de mettre au point l'algorithme de contrôle de la génératrice dans le contrôleur.

Selon une réalisation particulière de l'invention, la maquette comporte des pales modulables. La modularité des pales permet de tester différents types d'éolienne, par exemple avec différentes longueurs de pale ou différentes puissances nominales.

On entend par élément modulable, un élément amovible et apte à être remplacé par un autre élément de même type.

Selon une réalisation particulière de l'invention, la maquette comporte un flotteur modulable. La modularité du flotteur permet de tester différents couples flotteur/turbine.

Selon une réalisation particulière, l'outil de modélisation comporte en outre au moins un capteur d'effort. La présence d'un capteur d'effort dans l'outil de modélisation permet de qualifier la capacité de l'éolienne à supporter des charges de fatigue et des charges extrêmes.

Selon une réalisation particulière, l'outil de modélisation comporte en outre au moins un capteur de trajectoire donnant par exemple des informations de trajectoire concernant la nacelle de la maquette, le flotteur ou les pales.

L'invention concerne également un procédé de modélisation du comportement physique d'une éolienne, le fonctionnement de l'éolienne à échelle réelle étant contrôlé par un contrôleur, le procédé comportant :
- une représentation au moins partielle de l'éolienne à échelle réduite sous forme de maquette comprenant au moins un capteur mesurant une grandeur représentative du comportement physique de la maquette et au moins un actionneur à commande réglable actionnant un élément de la maquette,
- une conversion des mesures à l'échelle réduite issues du capteur en mesures à l'échelle réelle envoyées au contrôleur, et
- une conversion des consignes à l'échelle réelle reçues du contrôleur en consignes à l'échelle réduite envoyées à l'actionneur.

### 5. Liste des figures

D'autres caractéristiques et avantages innovants ressortiront de la description ci-après, fournie à titre indicatif et nullement limitatif, en référence aux dessins annexés, dans lesquels :
- la figure 1 est une représentation selon l'art antérieur d'une vue schématique en perspective d'une maquette d'éolienne flottante placée dans un bassin d'essai;
- La figure 2 est une représentation selon l'art antérieur d'un outil de test de contrôleur d'éolienne flottante comportant un logiciel de simulation interfacé avec le contrôleur ;
- La figure 3 représente schématiquement un outil de modélisation comportant un module de conversion interfacé avec une maquette et un contrôleur d'éolienne selon un mode de réalisation de l'invention ;
- La figure 4a est une vue schématique et en perspective de la maquette de la figure 3 sans le capot de la nacelle ;
- La figure 4b est une vue agrandie du détail B de la figure 4a ;
- La figure 5 est un diagramme représentant de manière groupée les flux d'information transmis entre les différents éléments de l'outil de modélisation selon un mode de réalisation de l'invention ; et
- La figure 6 est un diagramme représentant de manière détaillée les flux d'information transmis entre les différents éléments de l'outil de modélisation selon un mode de réalisation de l'invention.

### 6. Description détaillée

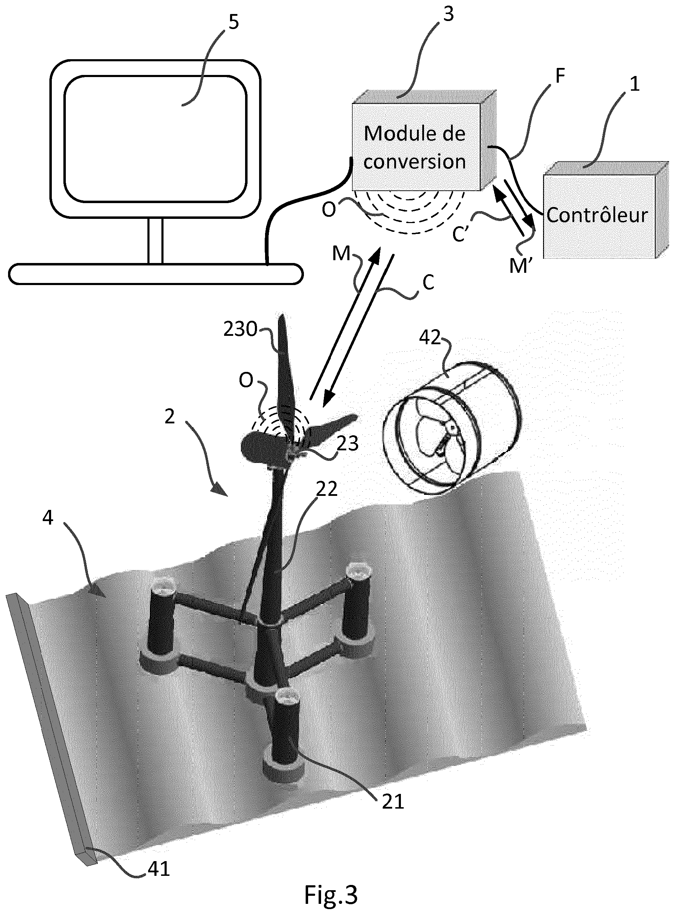

La figure 3 représente schématiquement un outil de modélisation du comportement physique d'une éolienne selon un mode de réalisation de l'invention. L'outil de modélisation comporte une maquette 2 de l'éolienne à une échelle réduite et un module de conversion 3. Le module de conversion 3 est interfacé d'une part avec la maquette et d'autre part avec un contrôleur 1 mettant en œuvre le contrôle commande de l'éolienne à tester. L'outil de modélisation est placé dans un bassin 4 comportant un batteur à houle 41 pour modéliser les vagues et une soufflerie 42 pour modéliser le vent.

Dans l'exemple de la figure 3, l'outil de modélisation est connecté à une interface graphique 5 par l'intermédiaire du module de conversion 3 afin de visualiser le résultat des essais en cours.

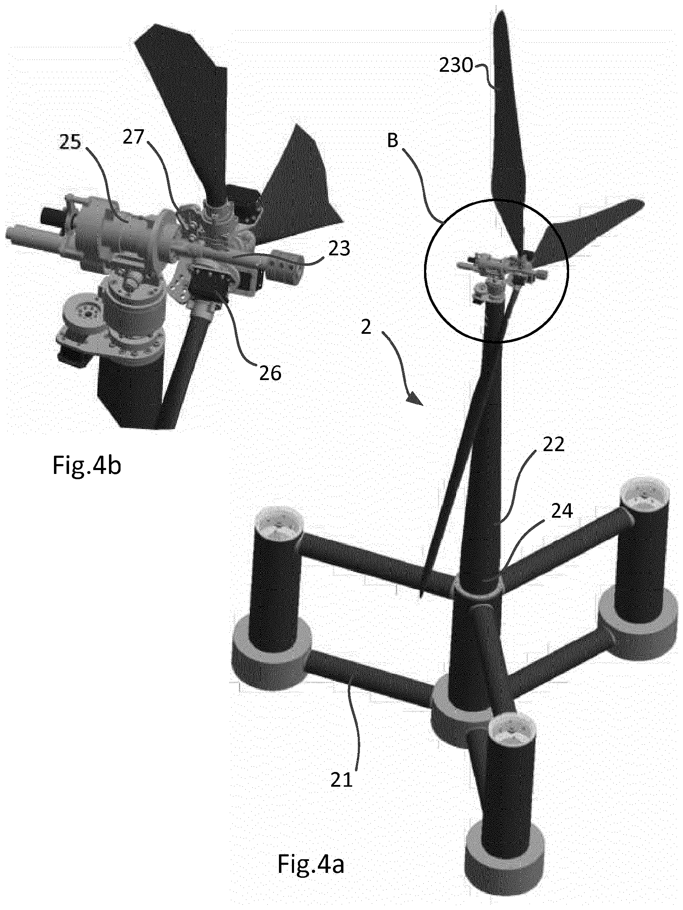

La description ci-après est faite en référence plus particulièrement à la figure 4a, qui représente la maquette 2 de la figure 3 sans le capot de la nacelle, et à la figure 4b qui est une vue agrandie du détail B de la figure 4a.

La maquette 2 est une représentation complète reprenant à l'échelle réduite tous les composants de l'éolienne à échelle réelle. Ainsi, la maquette 2 comporte un flotteur 21, un mât 22, un rotor 23 comportant 3 pales 230 et un boîtier électronique 24 placé dans le flotteur ou le mât. En variante, la maquette modélise partiellement l'éolienne et ne comporte que certains éléments de l'éolienne à l'échelle réelle, par exemple, uniquement la turbine.

La maquette 2 est conçue pour représenter le plus fidèlement possible le comportement physique, en particulier le comportement aérodynamique et le comportement hydrodynamique de l'éolienne à l'échelle réelle. Des lois de similitude existent, reposant par exemple sur le nombre de Reynolds pour les composantes aérodynamiques et sur le nombre de Froude pour les composantes hydrodynamiques. Une bonne représentation de l'éolienne par la maquette suppose que l'éolienne et la maquette aient le même nombre de Reynolds et le même nombre de Froude.

Plusieurs difficultés se posent dans la réalisation de la maquette 2. Une première difficulté réside dans le fait qu'une simple réduction d'échelle ne permet pas de conserver simultanément le nombre de Reynolds et le nombre de Froude. A titre d'exemple, une maquette obtenue par une réduction d'échelle de ratio 1/50 environ permettrait de conserver le nombre de Froude (mise à l'échelle de Froude) mais pas le nombre de Reynolds. En effet, pour un rotor d'éolienne de 150 mètres de diamètre à l'échelle réelle, le nombre de Reynolds expérimenté par les pales à l'échelle réelle est 10 à 1000 fois plus grand que le nombre de Reynolds expérimenté par les pales à l'échelle réduite.

Par conséquent, la maquette 2 est obtenue par une mise à l'échelle de Froude couplée à une modification de la géométrie des profils aérodynamiques du rotor permettant de conserver les performances des profils à échelle de Froude malgré le fait qu'ils ne travaillent pas au même nombre de Reynolds. Les profils sont sélectionnés spécifiquement pour leurs performances à bas Reynolds et de nouvelles pales 230 sont conçues avec pour objectif la modélisation à l'échelle de Froude des efforts engendrés par la turbine. Ces pales 230 sont agencées pour être orientables autour de leur axe respectif, et inclinables selon un angle de cône ayant pour droites génératrices les axes des pales, conformément aux pales de l'éolienne de taille réelle.

Une deuxième difficulté dans la réalisation de la maquette 2 réside dans la faible masse de ses composants à l'échelle réduite. Plus le taux de réduction est grand et plus il est difficile de concevoir le système en respectant la masse, la position du centre de gravité et les inerties. Le choix des matériaux et des modes de fabrication sont donc guidés par ce facteur d'échelle.

A titre purement illustratif, des turbines de 6 à 10MW peuvent être modélisées par une maquette obtenue avec un facteur d'échelle de 1/40 à 1/60. Or, si l'on veut réaliser un modèle réduit à l'échelle 1/50 d'un élément dont l'épaisseur de la tôle est de 15mm en acier, le modèle réduit devra avoir une épaisseur de 0,3 mm en acier, ou 1,6 mm en carbone. Une telle finesse d'épaisseur suppose des techniques de fabrication perfectionnées.

Par ailleurs, en plus des fonctions de l'éolienne, la maquette doit être équipée d'un système de mesures fournissant des informations exploitées dans le cadre des essais en bassin pour tester, optimiser et qualifier l'éolienne en cours de développement. Ainsi sont intégrés à la maquette des capteurs d'efforts, de moments, de repérage des pales en rotation, ou de repérage de la maquette en mouvement. Ce système de mesures est piloté par une électronique embarquée. L'intégration de tous ces éléments permettant de réaliser des mesures est pris en compte dans la conception de la maquette afin d'obtenir un modèle représentatif des masses, de la position du centre de gravité et des inerties.

A titre purement illustratif, l'implantation d'un système de mesures de 350 grammes dans la nacelle de la maquette représenterait à lui seul 10% de la masse autorisée pour la nacelle ou encore 75,6 tonnes à l'échelle réelle.

Les faibles masses disponibles pour les différents éléments de la maquette comme les pales, le moyeu, ou la génératrice, requièrent l'utilisation de matériaux performants, c'est-à-dire présentant un ratio masse/résistance faible. Par exemple, les pales de la maquette peuvent être réalisées en matériaux composites comprenant des fibres de carbone pré-imprégnées, avec une épaisseur pouvant se réduire à un dixième de millimètre. En outre, la conception de la maquette introduit des formes spécifiques ou des ajournements dans les différents éléments afin d'obtenir un modèle représentatif en terme de masses. En outre, si cela s'avère nécessaire pour conserver la position du centre de gravité et les inerties, un système de lest est mis en place dans la maquette.

Le boîtier électronique 24 placé dans le flotteur est connecté aux actionneurs de la maquette afin de leur transmettre les consignes qui leur sont destinées. En variante, au moins certains actionneurs reçoivent directement leurs consignes du module de conversion. Les actionneurs sont par exemple un servo-moteur d'orientation 26 des pales, un dispositif mécanique ou manuel de réglage d'inclinaison 27 des pales ou une génératrice électrique 25. Le boîtier électronique 24 reçoit également des mesures provenant des différents capteurs de l'outil de modélisation. En variante, au moins certains capteurs envoient directement leurs mesures au module de conversion. Les capteurs sont par exemple des capteurs d'efforts, de moments, de repérage des pales en rotation, ou de repérage de la maquette en mouvement ou encore un anémomètre ou un capteur de houle.

Le module de conversion comprend une interface conçue pour communiquer avec le contrôleur et une interface conçue pour communiquer avec la maquette. La communication est établie par exemple par ondes électromagnétiques, par exemple par ondes WIFI ou Bluetooth, par ondes optiques, par courant porteur NFC ou par voie filaire F, notamment via un joint tournant.

Le module de conversion convertit :
- les mesures M à l'échelle réduite issues des capteurs en mesures à l'échelle réelle envoyées au contrôleur, et
- les consignes C à échelle réelle issues du contrôleur en consignes à échelle réduite envoyées aux actionneurs.

L'outil de modélisation permet de modéliser la phase de « pleine charge » de l'éolienne. En effet, la maquette 2 comporte une génératrice électrique 25 dont la production électrique peut être régulée. En outre, la maquette 2 comporte des pales 230 orientables autour de leur axe respectif. L'orientation des pales est réalisée par le servo-moteur d'orientation 26. L'orientation est réalisée de façon groupée lorsque toutes les pales tournent simultanément du même angle de rotation autour de leur axe respectif ou de façon indépendante. Le moteur d'orientation 26 des pales est contrôlé par le contrôleur 1 en fonction des conditions de vent et de houle imposées par la soufflerie et le batteur à houle. Ainsi, dans une phase de pleine charge, le contrôleur commande l'orientation des pales de manière à dégrader les performances du rotor tandis que dans une phase de charge partielle, le contrôleur commande l'orientation des pales de manière à augmenter les performances du rotor.

Dans l'exemple de la figure 4a, la maquette 2 comporte des pales inclinables. L'inclinaison des pales est réalisée par un dispositif mécanique d'inclinaison des pales. L'inclinaison est définie par un angle de cône, le cône ayant pour droites génératrices les axes des pales. L"inclinaison 27 des pales est modifiée manuellement en fonction de l'éolienne représentée.

Dans l'exemple de la figure 4a, la maquette 2 comporte un flotteur modulable de manière à pouvoir tester différents couplages de turbine et flotteur.

En outre, l'outil de modélisation représenté permet de qualifier la capacité de différentes éoliennes à supporter des charges de fatigue et des charges extrêmes grâce à l'intégration de capteurs d'effort et de mouvements. En particulier, la mesure du mouvement du flotteur peut être réalisée par trajectométrie, à partir des données de plusieurs caméras. Les données des capteurs sont exploitées en temps réel par le contrôleur.

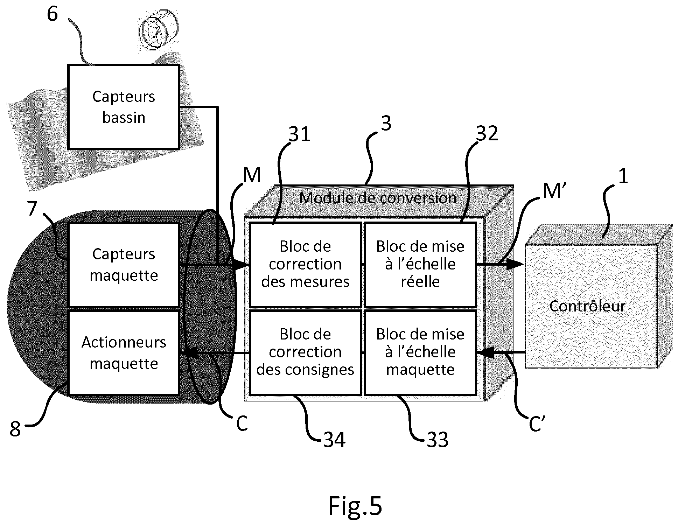

La figure 5 est un diagramme représentant de manière groupée les flux d'information transmis entre les différents éléments de l'outil de modélisation.

Les capteurs bassin 6 fournissent des mesures M relatives aux conditions ambiantes de test, par exemple des mesures caractérisant le vent et la houle.

Les capteurs maquette 7 fournissent des mesures à l'échelle réduite M relatives aux différents éléments de la maquette, par exemple des mesures caractérisant l'état des pales, de la génératrice et de la nacelle.

Les mesures à l'échelle réduite M sont transmises au module de conversion 3. Au sein du module de conversion 3, les mesures à l'échelle réduite M sont traitées dans un premier temps par un bloc de correction des mesures 31. Le bloc de correction des mesures 31 met en œuvre une table de correction pour obtenir des mesures corrigées. Les mesures corrigées sont ensuite transmises à un bloc de mise à l'échelle réelle 32 mettant en œuvre une loi de calcul permettant de convertir les mesures corrigées en mesures à l'échelle réelle M' représentatives de l'échelle réelle. Ainsi, les traitements successifs par le bloc de correction des mesures 31 puis par le bloc de mise à l'échelle réelle 32 permettent de représenter fidèlement le comportement physique et en particulier le comportement aérodynamique et le comportement hydrodynamique de l'éolienne à l'échelle réelle ainsi que les conditions ambiantes de test. En effet, une simple mise à l'échelle n'est, en règle générale, pas suffisante et une correction est nécessaire pour obtenir une modélisation satisfaisante.

Les mesures à l'échelle réelle M' sont transmises au contrôleur 1 afin d'être prises en compte dans le contrôle en temps réel effectué par le contrôleur 1. Le contrôleur 1, après traitement des mesures à l'échelle réelle M', fournit des consignes à l'échelle réelle C'. Les consignes à l'échelle réelle C' sont transmises au module de conversion 3. Au sein du module de conversion 3, les consignes à l'échelle réelle C' sont traitées dans un premier temps par un bloc de mise à l'échelle maquette 33. Le bloc de mise à l'échelle maquette 33 met en œuvre une loi de calcul permettant de convertir les consignes valables pour l'échelle réelle en consignes converties adaptées à l'échelle maquette. Les consignes converties sont ensuite transmises à un bloc de correction des consignes mettant un œuvre une table de correction pour obtenir des mesures à l'échelle maquette C corrigées. En effet, une simple mise à l'échelle n'est, en règle générale, pas suffisante et une correction est nécessaire pour obtenir des consignes pertinentes pour la maquette.

Les mesures à l'échelle maquette C corrigées sont transmises aux actionneurs maquette 8, actionnant différents éléments de la maquette, par exemple les pales, la génératrice ou la nacelle.

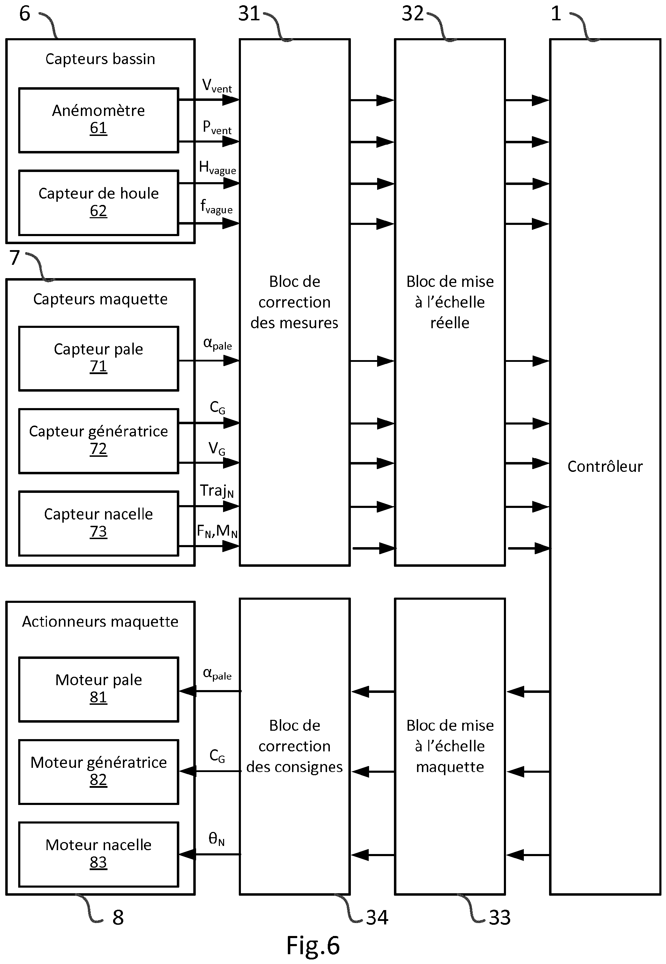

La figure 6 est un diagramme représentant de manière détaillée un exemple de flux d'information transmis entre les différents éléments de l'outil de modélisation. Comme mentionné plus haut, les capteurs bassin 6 et les capteurs maquette 7 transmettent des mesures au bloc de correction des mesures 31.

Parmi les capteurs bassin 6, un anémomètre 61 fournit une mesure de vitesse du vent Vᵥₑₙₜ et un capteur de houle 62 fournit une mesure de hauteur de vague H_{vague}.

Parmi les capteurs maquette 7, un capteur par pale 71 (un capteur par pale) fournit une mesure d'angle d'orientation de pale αₚₐₗₑ, des capteurs de la génératrice 72 fournissent un couple de la génératrice C_{G} et une vitesse de rotation V_{G}, des capteurs de la nacelle 73 fournissent une trajectoire de la nacelle Traj_{N} et des mesures d'efforts F_{N} et de moments M_{N} au niveau de la nacelle.

Comme mentionné plus haut, le bloc de correction des consignes 34 transmet des consignes aux actionneurs maquette 8. Parmi les actionneurs maquette 8, les moteurs des pales 81 modifient les angles d'orientation des pales αₚₐₗₑ, le moteur génératrice impose le couple électrique de la génératrice C_{G} ou la vitesse de rotation V_{G} de celle-ci et le moteur de la nacelle 83 modifie l'angle d'orientation de la nacelle Θ_{N} autour de l'axe du mât.

En variante, le module de conversion 3 met en œuvre la conversion des mesures ou des consignes différemment, par exemple, uniquement au moyen de tables de conversion ou uniquement au moyen d'équations. L'ordre de traitement peut également être changé entre le bloc de correction et le bloc de mise à l'échelle.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention tel que décrit dans les revendications.

## Revendications

1. Outil de modélisation du comportement physique d'une éolienne, le fonctionnement de l'éolienne à échelle réelle étant contrôlé par un contrôleur (1), l'outil de modélisation étant **caractérisé en ce qu'**il comporte :
- une maquette (2) au moins partielle de l'éolienne à échelle réduite comprenant au moins un capteur (7, 71, 72, 73) mesurant une grandeur représentative du comportement physique de la maquette et au moins un actionneur (8, 81, 82, 83) à commande réglable actionnant un élément de la maquette,
- un module de conversion (3) comprenant une interface conçue pour communiquer avec le contrôleur (1) et une interface conçue pour communiquer avec la maquette (2), le module de conversion convertissant :
∘ les mesures à l'échelle réduite (M) issues du capteur en mesures à l'échelle réelle (M') envoyées au contrôleur, et
∘ les consignes à l'échelle réelle (C') issues du contrôleur en consignes à l'échelle réduite (C) envoyées à l'actionneur.

2. Outil de modélisation selon la revendication 1 **caractérisé en ce que** le module de conversion comporte un bloc de mise à l'échelle (32, 33) mettant en œuvre une loi de calcul intervenant dans la conversion.

3. Outil de modélisation selon la revendication 1 ou 2 **caractérisé en ce que** le module de conversion comporte un bloc de correction (31, 34) mettant en œuvre une table de correction intervenant dans la conversion.

4. Outil de modélisation selon l'une quelconque des revendications précédentes **caractérisé en ce que**, la maquette comportant des pales (230) orientables, l'au moins un actionneur est un moteur d'orientation (26) d'une pale selon un angle de rotation autour de son axe.

5. Outil de modélisation selon l'une quelconque des revendications précédentes **caractérisé en ce que**, la maquette comportant des pales (230) inclinables, l'au moins un actionneur est un dispositif mécanique d'inclinaison (27) des pales selon un angle de cône ayant pour droites génératrices les axes des pales.

6. Outil de modélisation selon l'une quelconque des revendications précédentes **caractérisé en ce que**, la maquette comportant des pales (230), l'au moins un actionneur est une génératrice électrique (25) dont le rotor est entraîné par les pales de la maquette.

7. Outil de modélisation selon l'une quelconque des revendications précédentes **caractérisé en ce que** la maquette comporte des pales (230) modulables.

8. Outil de modélisation selon l'une quelconque des revendications précédentes **caractérisé en ce que** la maquette comporte un flotteur (21) modulable.

9. Outil de modélisation selon l'une quelconque des revendications précédentes **caractérisé en ce qu'**il comporte en outre au moins un capteur d'effort (F_{N}) ou de moment (M_{N}).

10. Procédé de modélisation du comportement physique d'une éolienne, le fonctionnement de l'éolienne à échelle réelle étant contrôlé par un contrôleur (1), le procédé de modélisation étant **caractérisé en ce qu'**il comporte :
- une représentation au moins partielle de l'éolienne à échelle réduite sous forme de maquette (2) comprenant au moins un capteur (7, 71, 72, 73) mesurant une grandeur représentative du comportement physique de la maquette et au moins un actionneur (8, 81, 82, 83) à commande réglable actionnant un élément de la maquette,
- une conversion des mesures à l'échelle réduite (M) issues du capteur en mesures à l'échelle réelle (M') envoyées au contrôleur, et
- une conversion des consignes à l'échelle réelle (C') reçues du contrôleur en consignes à l'échelle réduite (C) envoyées à l'actionneur.

## Patentansprüche

1. Werkzeug zur Modellierung des physikalischen Verhaltens einer Windkraftanlage, wobei der Betrieb der Windkraftanlage in realem Maßstab durch einen Controller (1) gesteuert wird, wobei das Modellierungswerkzeug **dadurch gekennzeichnet ist, dass** es umfasst :
- ein zumindest teilweises Modell (2) der Windkraftanlage im verkleinerten Maßstab, das mindestens einen Sensor (7, 71, 72, 73), der eine für das physikalische Verhalten des Modells repräsentative Größe misst, und mindestens einen Aktuator (8, 81, 82, 83) mit einstellbarer Steuerung umfasst, der ein Element des Modells betätigt,
- ein Umwandlungsmodul (3) mit einer Schnittstelle, die zur Kommunikation mit dem Controller (1) ausgelegt ist, und einer Schnittstelle, die zur Kommunikation mit dem Modell (2) ausgelegt ist, wobei das Umwandlungsmodul :
∘ die verkleinerten Messwerte (M), die vom Sensor stammen, in Messwerte im realen Maßstab (M'), die an die Steuerung gesendet werden, und
∘ die maßstabsgetreuen Sollwerte (C') von der Steuerung in maßstabsgetreu verkleinerte Sollwerte (C), die an den Aktuator gesendet werden.

2. Modellierungswerkzeug nach Anspruch 1, **dadurch gekennzeichnet, dass** das Konvertierungsmodul einen Skalierungsblock (32, 33) umfasst, der ein Rechengesetz implementiert, das an der Konvertierung beteiligt ist.

3. Modellierungswerkzeug nach Anspruch 1 oder 2, **dadurch gekennzeichnet, dass** das Konvertierungsmodul einen Korrekturblock (31, 34) enthält, der eine Korrekturtabelle implementiert, die in die Konvertierung eingreift.

4. Modellierungswerkzeug nach einem der vorhergehenden Ansprüche, **dadurch gekennzeichnet, dass**, da das Modell ausrichtbare Blätter (230) umfasst, der mindestens eine Aktuator ein Motor zur Ausrichtung (26) eines Blattes gemäß einem Drehwinkel um seine Achse ist.

5. Modellierungswerkzeug nach einem der vorhergehenden Ansprüche, **dadurch gekennzeichnet, dass**, da das Modell neigbare Blätter (230) umfasst, der mindestens eine Aktuator eine mechanische Vorrichtung (27) zum Neigen der Blätter gemäß einem Kegelwinkel ist, der als erzeugende Geraden die Achsen der Blätter hat.

6. Modellierungswerkzeug nach einem der vorhergehenden Ansprüche, **dadurch gekennzeichnet, dass**, da das Modell Blätter (230) umfasst, der mindestens eine Aktuator ein elektrischer Generator (25) ist, dessen Rotor von den Blättern des Modells angetrieben wird.

7. Modellierungswerkzeug nach einem der vorhergehenden Ansprüche, **dadurch gekennzeichnet, dass** das Modell modulierbare Blätter (230) umfasst.

8. Modellierungswerkzeug nach einem der vorhergehenden Ansprüche, **dadurch gekennzeichnet, dass** das Modell einen modulierbaren Schwimmer (21) umfasst.

9. Modellierungswerkzeug nach einem der vorhergehenden Ansprüche, **dadurch gekennzeichnet, dass** es außerdem mindestens einen Kraft- (FN) oder Momenten Sensor (MN) umfasst.

10. Verfahren zur Modellierung des physikalischen Verhaltens einer Windkraftanlage, wobei der Betrieb der Windkraftanlage im realen Maßstab durch einen Regler (1) gesteuert wird, wobei das Modellierungsverfahren **dadurch gekennzeichnet ist, dass** es Folgendes umfasst :
- eine zumindest teilweise Darstellung der Windkraftanlage im verkleinerten Maßstab in Form eines Modells (2), das mindestens einen Sensor (7, 71, 72, 73), der eine für das physikalische Verhalten des Modells repräsentative Größe misst, und mindestens einen Aktuator (8, 81, 82, 83) mit einstellbarer Steuerung umfasst, der ein Element des Modells betätigt,
- eine Umwandlung der verkleinerten Messwerte (M), die vom Sensor stammen, in Messwerte im realen Maßstab (M'), die an die Steuerung gesendet werden, und
- eine Umwandlung der von der Steuerung empfangenen Sollwerte im realen Maßstab (C') in Sollwerte im verkleinerten Maßstab (C), die an den Aktuator gesendet werden.

## Claims

1. Tool for modelling the physical behaviour of a wind turbine, the operation of the full-scale wind turbine being controlled by a controller (1), the modelling tool being **characterised in that** it comprises:
- an at least partial model (2) of the wind turbine on a reduced scale comprising at least one sensor (7, 71, 72, 73) measuring a quantity representative of the physical behaviour of the model and at least one actuator (8, 81, 82, 83) with adjustable control actuating an element of the model,
- a conversion module (3) comprising an interface designed to communicate with the controller (1) and an interface designed to communicate with the model (2), the conversion module converting:
∘ the scaled-down measurements (M) from the sensor into full-scale measurements (M') sent to the controller, and
∘ the full-scale setpoints (C') from the controller into reduced-scale setpoints (C) sent to the actuator.

2. Modelling tool according to claim 1, **characterised in that** the conversion module comprises a scaling block (32, 33) implementing a calculation law involved in the conversion.

3. Modelling tool according to claim 1 or 2, **characterised in that** the conversion module comprises a correction block (31, 34) implementing a correction table involved in the conversion.

4. Modelling tool according to any one of the preceding claims, **characterised in that**, since the model comprises steerable blades (230), the at least one actuator is a motor (26) for steering a blade through an angle of rotation about its axis.

5. Modelling tool according to any one of the preceding claims, **characterised in that**, the model comprising tiltable blades (230), the at least one actuator is a mechanical device (27) for tilting the blades according to a cone angle having the axes of the blades as straight generators.

6. Modelling tool according to any of the preceding claims, **characterised in that**, the model comprising blades (230), the at least one actuator is an electric generator (25) whose rotor is driven by the blades of the model.

7. A modelling tool according to any one of the preceding claims, **characterised in that** the model comprises modulable blades (230).

8. A modelling tool according to any one of the preceding claims, **characterised in that** the model comprises a modulable float (21).

9. Modelling tool according to any of the preceding claims, **characterised in that** it further comprises at least one force (FN) or moment (MN) sensor.

10. A method for modelling the physical behaviour of a wind turbine, the operation of the full-scale wind turbine being controlled by a controller (1), the modelling method being **characterised in that** it comprises:
- an at least partial representation of the wind turbine on a reduced scale in the form of a model (2) comprising at least one sensor (7, 71, 72, 73) measuring a quantity representative of the physical behaviour of the model and at least one actuator (8, 81, 82, 83) with adjustable control actuating an element of the model,
- a conversion of the reduced-scale measurements (M) from the sensor into full-scale measurements (M') sent to the controller, and
- converting the full-scale setpoints (C') received from the controller into reduced-scale setpoints (C) sent to the actuator.
